# EUROPEAN PATENT APPLICATION

(11) **EP 1 418 216 A1**
(43) Date of publication of application: **12.05.2004**
(21) Application number: 02079705.6
(22) Date of filing: 07.11.2002
(51) Int. Cl.: C09K 5/10

(54) **Heat transfer fluids for application over a broad range of temperatures**

(71) Applicant: N.V. Solutia S.A., 1050 Bruxelles (BE)
(72) Inventor: The designation of the inventor has not yet been filed
(74) Representative: Colens, Alain

(57) **Abstract**

Heat transfer fluids which can be used over a broad range of temperatures such as from 175 °C to -145 °C are disclosed. The heat transfer fluids consist essentially of a mixture of at least two structurally non-identical cycloalkane-alkyl or-polyalkyl compounds, or a mixture of at least two structurally non-identical aliphatic hydrocarbons, or a mixture of a cycloalkane-alkyl or -polyalkyl compound and an aliphatic hydrocarbon. The individual components are present at levels such as to confer to the fluid composition a cloud point below - 100 °C, a vapor pressure at +175 °C below 1300 kPa, and a viscosity, measured at the cloud point temperature +10 °C, below 400 cP.

## Description

This invention relates to heat transfer fluids which can beneficially be used over a broad range of temperatures such as at temperatures from below -100 °C up to +175 °C. The inventive compositions consist essentially of a component selected from the group consisting of: a mixture of, at least, two structurally non-identical cycloalkane-alkyl or -polyalkyl components; a mixture of, at least, two structurally non-identical aliphatic hydrocarbons having a linear or branched chain; and a mixture of a cycloalkane-alkyl or -polyalkyl and an aliphatic hydrocarbon having a linear or branched chain. The compositions are formulated to possess: a cloud point below -100 °C, preferably in the range of from -110 °C to -175 °C; a vapor pressure at +175 °C, below 1300 kPa; and a viscosity, measured at the cloud point temperature of the fluid +10 °C, below 400 cP.

Heat transfer fluids have been used commercially for a long time. As one would consequently expect, the prior art relating to this domain is crowded and diverse and possessed of multiple improvement proposals, in particular with respect to improving the efficacy of such fluids at low temperatures. Presently, commercial heat transfer fluids can be used at temperatures down to -80 °C. Below that temperature, viscosity can be too high and/or products can be converted into solids. Several commercial products were formulated to mitigate the negatives but were found to be unsuitable for application over a broad range of temperatures because of significant shortcomings including too high vapor pressures, too low flash points and/or too high viscosities at the operating temperatures. DE-A-42 40 306 discloses heat transfer fluids, based on methylcyclopentane, having significant deficiencies, such as low flash point (-25 °C) and high vapor pressure, which can render its utilization aleatory. A commercial silicon-based product has too high viscosity and freezing point and is, in addition, economically less attractive.

US-A-6,086,782 discloses heat transfer fluid compositions containing major, possibly comparable, levels of a terpene and an alkylbenzene. These compositions are said to retain the liquid state at any temperature in the range of from -18 °C to -115 °C. US-A-5,484,547 describes low temperature heat transfer fluids consisting of major levels of a glycol component and a second component selected from dioxolanes, glycol formal and dioxanes and minor levels of conventional additives. FR-A-1.427.017 relates to refrigerant fluids containing a mixed isopropyl/isobutyl orthosilicate tetraester and a minor level of an ethyl/butyl propyleneglycol diether. These compositions can be used at temperatures down to -54 °C. Phillip E. Tuma, Pharmaceutical Technology, March 2000, pages 104-114, has summarized various obstacles on the road to achieving beneficial low temperature heat transfer performance. Particular attention is drawn, among others, to flammability, environmental effects and thermal performance. EP-A-92 089 922.1 pertains to working fluids comprising a mixture of fluoroalkanes and hydrofluoroalkanes, possibly in equal weight proportions. The compositions can be used in refrigerators, freezers, heat pumps and air conditioning systems. Hydrofluorocarbons do not meet the requirements of this invention among others because of excessive vapor pressures at temperatures above e.g. 100 °C. While known fluids could be used at selected low temperature conditions, such known fluids are generally inadequate, in particular for use at higher temperatures. Patent application DE-A-198 53 571 divulges heat transfer fluids based on ethylcyclopentane. This technology can allegedly be used over an enlarged temperature range of e.g. from -110 °C to +110 °C. WO-A-01/92436 describes heat transfer fluids based on 2-methyl pentane, 3-methyl pentane, 1,5-hexadiene or 1-hexene.

The negatives attached to prior art low-temperature fluids are operationally significant; the actual application of the art technology is capital intensive and cannot yield manufacturing flexibility over a broad range of temperatures. In particular, short-chain cycloalkane species as such were found to be unsuitable for operation over a broad range of temperatures and, in fact, are not capable of curing, to any meaningful degree, known operational insufficiencies.

It is therefore a major object of this invention to provide heat transfer fluids capable of operating over a broad range of temperatures. It is another object of this invention to formulate heat transfer fluids capable of being used effectively at a broad range of temperatures, particularly from +175 °C to -145 °C while avoiding, inter alia, significant vapor pressure build-up and maintaining adequate fluidity properties. It is yet another object of this invention to formulate heat transfer fluids having acceptable physical properties even in the substantial absence of aromatics. The foregoing and other benefits can now be secured from heat transfer fluids consisting essentially of a component selected from the group consisting of: a mixture of narrowly defined cycloalkane-alkyl or polyalkyl; a mixture of specifically defined aliphatic hydrocarbons; and mixtures of a cycloalkane-alkyl, or polyalkyl, and an aliphatic hydrocarbon, at a level such that the composition exhibits cumulative physical properties, including a cloud point below -100 °C, a vapor pressure at +175 °C below 1300 kPa, and a viscosity, measured at the cloud point temperature +10 °C, below 400 cP. The inventive technology herein is described in more detail hereinafter.

Particular terms as used throughout the description and the claims shall have the following meaning:
"cloud point" is defined as the temperature of equilibrium between a multicomponent liquid of specified composition and the first solid phase that appears when that liquid is cooled measured in accordance with the method of ASTM D-2500. The cloud point of the liquid heat transfer fluid can also be calculated in accordance with the method of S.I. SANDERS, Chemical and Engineering Thermodynamics, Wiley, New York, 1977, Chapter 8;
"vapor pressure" is measured thereby using the method of PROCESS HEATING, November/December 1994, page 27, Volume 1, Number 4, or calculated by methods described in R.C. REID J.M. PRAUSNITZ and T.K. SHERWOOD, The Properties of Gases and Liquids, McGraw-Hill, New York, 1977;
"viscosity" is determined in accordance with the method of ASTM D-445, or calculated by the method of VAN VELZEN, CARDOZO and LANGENKAMP, as described in R.C. REID, J.M. PRAUSNITZ and T.K. SHERWOOD, The Properties of Gases and Liquids, McGraw-Hill, New York, 1977, Chapter 9;
the term "alkyl" embraces, unless defined differently, straight or branched species;
the terms "aliphatic hydrocarbon" and "aliphatic alkane" can be used interchangeably;
the term "structurally non-identical" means, with respect to the cycloalkane-alkyl or -polyalkyl components and with respect to the aliphatic hydrocarbon components, that the first of such individual components has a different molecular weight as compared to the second component or that the first and the second components are structural isomers; and
"percent" or "%" refers, unless defined more specifically, to percent or % by weight.

This invention concerns heat transfer fluids which can be used beneficially over a broad range of temperatures such as at temperatures in the range from -145 °C up to +175 °C. The heat transfer fluid compositions herein consist essentially of a component selected from the group consisting of: a mixture of two structurally non-identical cycloalkane-alkyl or -polyalkyl components, wherein the cycloalkane moiety contains from 5 to 8 carbon atoms, the alkyl moiety contains from 1 to 6 carbon atoms with the proviso that the total number of carbon atoms in the alkyl moiety(ies) is in the range of from 1 to 10; a mixture of, at least, two structurally non-identical aliphatic hydrocarbons having a linear or branched chain with from 5 to 15 carbon atoms; and a mixture of a cycloalkane-alkyl or -polyalkyl, wherein the cycloalkane moiety contains from 5 to 8 carbon atoms, the alkyl moiety contains from 1 to 6 carbon atoms with the proviso that the total number of carbon atoms in the alkyl moiety (ies) is in the range of from 1 to 10, and an aliphatic hydrocarbon having a linear or branched chain with from 5 to 15 carbon atoms; at a level such that the composition has a cloud point below -100 °C, preferably in the range of from -110 °C to -175 °C, a vapor pressure, at +175 °C, below 1300 kPa, and a viscosity, measured at the cloud point temperature +10 °C, below 400 cP. In preferred executions herein, the alkyl moiety in the cycloalkane-alkyl component is selected from methyl, ethyl and propyl, the aliphatic hydrocarbon contains from 5 to 10 carbon atoms, the viscosity is below 300 cP and the vapor pressure, at +175 °C, is below 827 kPa, more preferably below 621 kPa.

The structurally non-identical components are characterized by a different molecular weight of the first (cycloalkane/aliphatic hydrocarbon) component versus the second component, and thus can translate into different numbers of carbon atoms and/or different numbers of hydrogen atoms, or in that the first and the second (cycloalkane/aliphatic hydrocarbon) components are structural isomers. Examples of structurally non-identical cycloalkanes of different molecular weights are cyclo-pentane and cyclo-hexane. Examples of non-identical cycloalkane isomers are: 1,2-dimethyl cyclohexane versus 1,3-dimethyl cyclohexane; and n-propyl cyclohexane versus isopropyl. cyclohexane. Examples of cycloalkane components having different numbers of hydrogen atoms are perhydroindene versus n-propyl cyclohexane. Examples of structurally non-identical aliphatic hydrocarbons of different molecular weights are n-hexane and n-heptane. Examples of structurally non-identical isomers are pentane-2-methyl and pentane-3-methyl.

Representative and preferred species of the essential first or second cycloalkane component are: cyclohexane-methyl, -dimethyl, -ethylmethyl, -trimethyl, -ethyl and -propyl; cyclopentane-methyl, -dimethyl, -ethylmethyl, -trimethyl, -ethyl and -propyl; cycloheptane-methyl, -dimethyl, -ethylmethyl, -trimethyl, -ethyl and -propyl; and cyclooctane-methyl, -dimethyl, -ethylmethyl, trimethyl, -ethyl and -propyl.

The aliphatic hydrocarbon preferably contains from 5 to 10 carbon atoms. Representative and preferred species of the first or second aliphatic alkane are: pentane-2,2,4-trimethyl; pentane-2,3,4-trimethyl; pentane-2-methyl; pentane-3-methyl; hexane-2-methyl; hexane-3-methyl; n-hexane; hexane-2,2-dimethyl; hexane-3,3-dimethyl; n-heptane; heptane-4-methyl; n-octane; and octane-2-methyl. Examples of preferred combinations of aliphatic hydrocarbons are as follows: n-hexane/2,2,4-trimethylpentane; 2-methylhexane/2,2,4-trimethylpentane; 2-methylhexane/n-heptane; 2-methylhexane/n-hexane; 2,2,4-trimethylpentane/n-heptane; and n-hexane/n-heptane. The ponderal ratios of aliphatic hydrocarbons, in mixtures thereof, can be varied over the complete range of from 99 : 1 to 1 : 99. It was found that, in the substantial absence of a cycloalkane component e.g. in the event the cycloalkane represents less than 5 % of the combination of cycloalkane component and aliphatic component (100 %), the ponderal ratio of aliphatic hydrocarbon species in the binary mixture thereof is preferably in the range of from 90 : 10 to 10 : 90, more preferably of from 70 : 30 to 30 : 70.

The ponderal (weight) ratios of the first cycloalkane component to the second cycloalkane component are generally in the range of from 95 : 5 to 5 : 95, preferably of from 90 : 10 to 10 : 90, more preferably of from 75 : 25 to 25 to 75. Examples of preferred combinations of structurally non-identical cycloalkane components are: ethylcyclopentane/ethylcyclohexane; ethylcyclopentane/n-propylcyclohexane; methylcyclohexane/ethylcyclohexane; methylcyclohexane/n-propylcyclohexane; ethylcyclohexane/n-propylcyclohexane; and methylcyclohexane/ethylcyclopentane.

The claimed compositions can also be represented by a mixture of a cycloalkane-alkyl or -polyalkyl in combination with an aliphatic hydrocarbon in accordance with Claim 1(c). The individual and preferred species of such components are as described above. The ponderal ratios of the cycloalkane component to the aliphatic hydrocarbon in such mixtures are generally in the range of from 97 : 3 to 10 : 90, preferably of from 80 : 20 to 25 : 75, more preferably of from 70 : 30 to 35 : 65. Both components, i.e. the cycloalkane component and the aliphatic hydrocarbon component, can in such combinations, be represented by a mixture of individual components. As an example, methylcyclohexane can be combined with an aliphatic component represented by a mixture of 2,2,4-trimethylpentane and n-heptane or 2-methylhexane can be combined with a cycloalkane component represented by a mixture of ethylcyclohexane and n-propylcyclohexane.

In one preferred execution herein, a heat transfer fluid is concerned consisting essentially of a combination of an aliphatic hydrocarbon and a cycloalkane-alkyl or -polyalkyl in the meaning of Claim 1(c). The aliphatic hydrocarbon and the cycloalkane components are as defined hereinbefore. The weight ratio of aliphatic hydrocarbon to cycloalkane component is preferably in the range of from 95 : 5 to 50 : 50, most preferably from 90 : 10 to 60 : 40. Both, the aliphatic hydrocarbon and the cycloalkane component can be represented by mixtures of structurally non-identical species as defined above. Preferred aliphatic species for use in such compositions can be selected from 3-methylpentane, 2-methylpentane, 2,2,4-trimethylpentane and n-hexane. Examples of preferred cycloalkane species are methyl- and ethyl-cyclohexane. Preferred heat transfer fluids so formulated are listed in Examples 68-73. These fluids were found to be superiorly effective over a broad temperature range down to temperatures below -140 °C.

The inventive compositions can contain additive levels of ingredients that serve for optimizing and enhancing the performance of the inventive compositions. Such additives are well-known in the domain of heat transfer fluids and are generally used in art-established levels for their known functionality. Specific examples of suitable additives include anti-oxidants, dyes and acid scavengers. The term "additive level" is meant to define a cumulative level of from 0.01 % to 4 %, preferably from 0.01 % to 2 %

The cycloalkane and/or alkane component represents the major and predominant constituent of the claimed heat transfer compositions. As such, the cycloalkane/alkane constituent represents more than 90 %, preferably more than 96 %, most preferably from 98 % to 100 % of the inventive heat transfer compositions.

Comparative performance parameters of a series of examples in accordance with this invention were determined thereby using the methods recited in the patent description. The results are listed in the following tables whereby the column headings refer to the following:
**A** = Sample Number;
**B** = Cloud Point in °C;
**C** = Vapor Pressure at +175 °C in kPa;
**D** = Viscosity in cP at cloud point temperature +10 °C; and
**E** = Ponderal (weight %) Fraction of Components.

| **A** | **B** | **C** | **D** | **E** | **COMPONENTS** |
|---|---|---|---|---|---|
| 8 | -155.3 | 821.8 | 213.8 | 47.2 | Methylcyclopentane |
| | | | | 46.7 | Ethylcyclopentane |
| | | | | 6.1 | 2,2,4-Trimethylpentane |
| | | | | | |
| 9 | -154.4 | 826.7 | 194.8 | 50.2 | Methylcyclopentane |
| | | | | 49.8 | Ethylcyclopentane |
| | | | | | |
| 10 | -152.5 | 500.6 | 251.9 | 49.5 | Ethylcyclopentane |
| | | | | 32.5 | Methylcyclohexane |
| | | | | 18.0 | Ethylcyclohexane |
| | | | | | |
| 11 | -1.52.0 | 578.5 | 185.9 | 51.5 | Ethylcyclopentane |
| | | | | 34.4 | Methylcyclohexane |
| | | | | 14.1 | 2-Methylhexane |
| | | | | | |
| 12 | -150.3 | 518.5 | 203.9 | 55.7 | Ethylcyclopentane |
| | | | | 36.2 | Methylcyclohexane |
| | | | | 8.1 | n-Propylcyclohexane |
| | | | | | |
| 13 | -149.6 | 561.9 | 165.4 | 58.9 | Ethylcyclopentane |
| | | | | 38.7 | Methylcyclohexane |
| | | | | 2.4 | n-Hexane |
| | | | | | |
| 14 | -149.0 | 543.3 | 174.7 | 60.4 | Ethylcyclopentane |
| | | | | 39.6 | Methylcyclohexane |
| | | | | | |
| 15 | -148.2 | 531.6 | 121.8 | 60.6 | Ethylcyclopentane |
| | | | | 17.4 | 2-Methylhexane |
| | | | | 22.0 | Ethylcyclohexane |
| | | | | | |
| 16 | -147.5 | 546.7 | 160.6 | 55.2 | Ethylcyclopentane |
| | | | | 42.3 | Methylcyclohexane |
| | | | | 2.5 | n-Heptane |
| | | | | | |
| 17 | -146.2 | 497.1 | 125.7 | 65.9 | Ethylcyclopentane |
| | | | | 24.0 | Ethylcyclohexane |
| | | | | 10.1 | 2,2,4-Trimethylpentane |
| | | | | | |
| 18 | -146.2 | 448.1 | 132.9 | 65.8 | Ethylcyclopentane |
| | | | | 24.1 | Ethylcyclohexane |
| | | | | 10.1 | n-Propylcyclohexane |
| | | | | | |
| 19 | -146.1 | 604.7 | 93.3 | 65.7 | Ethylcyclopentane |
| | | | | 21.7 | 2-Methylhexane |
| | | | | 12.6 | 2,2,4-Trimethylpentane |
| | | | | | |
| 20 | -145.2 | 504.0 | 103.3 | 70.8 | Ethylcyclopentane |
| | | | | 25.9 | Ethylcyclohexane |
| | | | | 3.3 | n-Hexane |
| | | | | | |
| 21 | -145.0 | 479.9 | 111.8 | 71.1 | Ethylcyclopentane |
| | | | | 26.0 | Ethylcyclohexane |
| | | | | 2.9 | n-Heptane |
| | | | | | |
| 22 | -144.7 | 546.7 | 91.1 | 71.9 | Ethylcyclopentane |
| | | | | 16.9 | 2-Methylhexane |
| | | | | 11.2 | n-Propylcyclohexane |
| | | | | | |
| 23 | -144.7 | 621.2 | 75 | 73.6 | Ethylcyclopentane |
| | | | | 22.6 | 2-Methylhexane |
| | | | | 3.8 | n-Hexane |
| | | | | | |
| 24 | -144.5 | 596.4 | 79.7 | 73.8 | Ethylcyclopentane |
| | | | | 22.8 | 2-Methylhexane |
| | | | | 3.4 | n-Heptane |
| | | | | | |
| 25 | -144.4 | 475.0 | 108.5 | 73.2 | Ethylcyclopentane |
| | | | | 26.8 | Ethylcyclohexane |
| | | | | | |
| 26 | -143.9 | 595.7 | 76.5 | 76.2 | Ethylcyclopentane |
| | | | | 23.8 | 2-Methylhexane |
| | | | | | |
| 27 | -143.3 | 540.5 | 135.8 | 48.5 | Methylcyclohexane |
| | | | | 24.1 | 2-Methylhexane |
| | | | | 27.4 | Ethylcyclohexane |
| | | | | | |
| 28 | -143.2 | 518.5 | 95.8 | 76.1 | Ethylcyclopentane |
| | | | | 11.8 | 2,2,4-Trimethylpentane |
| | | | | 12.2 | n-Heptane |
| | | | | | |
| 29 | -142.3 | 592.9 | 73.8 | 81.0 | Ethylcyclopentane |
| | | | | 14.5 | 2,2,4-Trimethylpentane |
| | | | | 4.5 | n-Hexane |
| | | | | | |
| 30 | -142.1 | 562.6 | 80.4 | 81.5 | Ethylcyclopentane |
| | | | | 14.5 | 2,2,4-Trimethylpentane |
| | | | | 4.0 | n-Hexane |
| | | | | | |
| 31 | -142.0 | 528.8 | 77.2 | 82.7 | Ethylcyclopentane |
| | | | | 2 | n-Hexane |
| | | | | 13.3 | n-Propylcyclohexane |
| | | | | | |
| 32 | -141.8 | 500.5 | 84.2 | 82.9 | Ethylcyclopentane |
| | | | | 13.4 | n-Propylcyclohexane |
| | | | | 3.7 | n-Heptane |
| | | | | | |
| 33 | -141.2 | 559.8 | 76.8 | 85.0 | Ethylcyclopentane |
| | | | | 15.0 | 2,2,4,-Trimethylpentane |
| | | | | | |
| 34 | -141.0 | 494.3 | 81 | 86.0 | Ethylcyclopentane |
| | | | | 14.0 | n-Propylcyclohexane |
| | | | | | |
| 35 | -141.0 | 630.8 | 95.8 | 50.8 | Methylcyclohexane |
| | | | | 30.2 | 2-Methylhexane |
| | | | | 19.0 | 2,2,4-Trimethylpentane |
| | | | | | |
| 36 | -140.7 | 580.5 | 62.4 | 90.7 | Ethylcyclopentane |
| | | | | 5.0 | n-Hexane |
| | | | | 4.3 | n-Heptane |
| | | | | | |
| 37 | -140.4 | 495.0 | 185.6 | 53.7 | Methylcyclohexane |
| | | | | 30.7 | Ethylcyclohexane |
| | | | | 15.6 | 2,2,4-Trimethylpentane |
| | | | | | |
| 38 | -140.1 | 424.7 | 229 | 54.2 | Methylcyclohexane |
| | | | | 31.6 | Ethylcyclohexane |
| | | | | 14.2 | n-Propylcyclohexane |
| | | | | | |
| 39 | -139.8 | 578.4 | 59 | 94.7 | Ethylcyclopentane |
| | | | | 5.3 | n-Hexane |
| | | | | | |
| 40 | -139.4 | 542.6 | 64.6 | 95.4 | Ethylcyclopentane |
| | | | | 4.6 | n-Heptane |
| | | | | | |
| 41 | -138.8 | 668.1 | 68.6 | 59.9 | Methylcyclohexane |
| | | | | 34.0 | 2-Methylhexane |
| | | | | 6.1 | n-Hexane |
| | | | | | |
| 42 | -138.7 | 510.2 | 127.2 | 59.5 | Methylcyclohexane |
| | | | | 34.0 | Ethylcyclohexane |
| | | | | 5.5 | n-Hexane |
| | | | | | |
| 43 | -138.5 | 629.5 | 78.4 | 60.2 | Methylcyclohexane |
| | | | | 34.3 | 2-Methylhexane |
| | | | | 5.5 | n-Heptane |
| | | | | | |
| 45 | -138.4 | 559.2 | 101.1 | 59.5 | Methylcyclohexane |
| | | | | 24.8 | 2-Methylhexane |
| | | | | 15.7 | n-Propylhexane |
| | | | | | |
| 46 | -138.1 | 471.6 | 166.3 | 60.5 | Methylcyclohexane |
| | | | | 34.5 | Ethylcyclohexane |
| | | | | 5.0 | n-Heptane |
| | | | | | |
| 47 | -137.3 | 630.2 | 74.5 | 63.5 | Methylcyclohexane |
| | | | | 36.5 | 2-Methylhexane |
| | | | | | |
| 48 | -137.1 | 459.9 | 176.5 | 62.9 | Methylcyclohexane |
| | | | | 37.1 | Ethylcyclohexane |
| | | | | | |
| 49 | -136.4 | 521.2 | 144 | 62.3 | Methylcyclohexane |
| | | | | 20.8 | 2,2,4-Trimethylpentane |
| | | | | 16.9 | n-Propylcyclohexane |
| | | | | | |
| 50 | -135.0 | 564.7 | 53.2 | 40.3 | 2-Methylhexane |
| | | | | 33.1 | Ethylcyclohexane |
| | | | | 26.6 | 2,2,4-Trimethylpentane |
| | | | | | |
| 51 | -134.7 | 584.0 | 102.2 | 67.7 | Methylcyclohexane |
| | | | | 25.3 | 2,2,4-Trimethylpentane |
| | | | | 7.0 | n-Heptane |
| | | | | | |
| 52 | -134.2 | 548.8 | 90 | 71.8 | Methylcyclohexane |
| | | | | 7.8 | n-Hexane |
| | | | | 20.4 | n-Propylcyclohexane |
| | | | | | |
| 53 | -133.6 | 492.2 | 129.5 | 72.4 | Methylcyclohexane |
| | | | | 20.7 | n-Propylcyclohexane |
| | | | | 6.9 | n-Heptane |
| | | | | | |
| 54 | -133.2 | 475.0 | 53.3 | 40.7 | 2-Methylhexane |
| | | | | 40.0 | Ethylcyclohexane |
| | | | | 19.3 | n-Propylcyclohexane |
| | | | | | |
| 55 | -133.0 | 581.2 | 103 | 72.6 | Methylcyclohexane |
| | | | | 27.4 | 2,2,4-Trimethylpentane |
| | | | | | |
| 56 | -132.0 | 616.4 | 34.8 | 47.4 | 2-Methylhexane |
| | | | | 43.0 | Ethylcyclohexane |
| | | | | 9.6 | n-Hexane |
| | | | | | |
| 57 | -131.9 | 479.2 | 141.1 | 77.3 | Methylcyclohexane |
| | | | | 22.7 | n-Propylcyclohexane |
| | | | | | |
| 58 | -131.8 | 632.9 | 60.3 | 81.4 | Methylcyclohexane |
| | | | | 10.0 | n-Hexane |
| | | | | 8.6 | n-Heptane |
| | | | | | |
| 59 | -131.4 | 550.2 | 40 | 48.0 | 2-Methylhexane |
| | | | | 43.4 | Ethylcyclohexane |
| | | | | 8.6 | n-Heptane |
| | | | | | |
| 60 | -131.3 | 604.0 | 39 | 48.8 | 2-Methylhexane |
| | | | | 33.9 | 2,2,4-Trimethylpentane |
| | | | | 17.3 | n-Propylcyclohexane |
| | | | | | |
| 61 | -130.3 | 743.2 | 27.5 | 53.9 | 2-Methylhexane |
| | | | | 35.5 | 2,2,4-Trimethylpentane |
| | | | | 10.6 | n-Hexane |
| | | | | | |
| 62 | -130.0 | 635.0 | 58.1 | 88.9 | Methylcyclohexane |
| | | | | 11.1 | n-Hexane |
| | | | | | |
| 63 | -128.3 | 675.0 | 28.8 | 52.9 | 2-Methylhexane |
| | | | | 47.1 | 2,2,4-Trimethylpentane |
| | | | | | |
| 64 | -128.2 | 370.9 | 72.3 | 46.3 | Ethylcyclohexane |
| | | | | 30.4 | 2,2,4-Trimethylpentane |
| | | | | 23.3 | n-Propylcyclohexane |
| | | | | | |
| 65 | -127.4 | 689.5 | 23.1 | 61.6 | 2-Methylhexane |
| | | | | 13.2 | n-Hexane |
| | | | | 25.2 | n-Propylcyclohexane |
| | | | | | |
| 66 | -126.9 | 555.7 | 36 | 48.9 | Ethylcyclohexane |
| | | | | 38.1 | 2,2,4-Trimethylpentane |
| | | | | 13.0 | n-Hexane |
| | | | | | |
| 67 | 126.3 | 606.7 | 26 | 63.6 | 2-Methylhexane |
| | | | | 24.2 | n-Propylcyclohexane |
| | | | | 12.2 | n-Heptane |
| | | | | | |
| 68 | -166.8 | 1132.8 | 188 | 77.4 | 3-Methylpentane |
| | | | | 15.5 | Methylcyclohexane |
| | | | | 7.1 | Ethylcyclohexane |
| | | | | | |
| 69 | -166.3 | 1165.9 | 175.1 | 80.5 | 3-Methylpentane |
| | | | | 15.2 | Methylcyclohexane |
| | | | | 4.3 | 2,2,4-Trimethylpentane |
| | | | | | |
| 70 | -159.5 | 1125.2 | 143.6 | 66.8 | 2-Methylpentane |
| | | | | 22.4 | Methylcyclohexane |
| | | | | 10.8 | Ethylcyclohexane |
| | | | | | |
| 71 | -152.9 | 1163.1 | 60.3 | 82.4 | 3-Methylpentane |
| | | | | 15.4 | Ethylcyclohexane |
| | | | | 2.2 | n-Hexane |
| | | | | | |
| 72 | -149.6 | 1110.1 | 72 | 60.2 | 2-Methylpentane |
| | | | | 36.9 | Methylcyclohexane |
| | | | | 2.9 | n-Hexane |
| | | | | | |
| 73 | -149.6 | 1041.1 | 62.8 | 59.1 | 3-Methylpentane |
| | | | | 38.0 | Methylcyclohexane |
| | | | | 2.9 | n-Hexane |

The foregoing testing results demonstrate the superior performance of the inventive technology.

## Claims

1. Heat transfer fluid, for use over a broad range of temperatures, consisting essentially of a component selected from the group consisting of:
(a) a mixture of at least two structurally non-identical cycloalkane-alkyl or -polyalkyl components, wherein the cycloalkane moiety contains from 5 to 8 carbon atoms, the alkyl moiety contains from 1 to 6 carbon atoms with the proviso that the total number of carbon atoms in the alkyl moiety(ies) is in the range of from 1 to 10;
(b) a mixture of, at least, two structurally non-identical aliphatic hydrocarbons having a linear or branched chain with from 5 to 15 carbon atoms; and
(c) a mixture of a cycloalkane-alkyl or -polyalkyl, wherein the cycloalkane moiety contains from 5 to 8 carbon atoms, the alkyl moiety contains from 1 to 6 carbon atoms with the proviso that the total number of carbon atoms in the alkyl moiety (ies) is in the range of from 1 to 10, and an aliphatic hydrocarbon having a linear or branched chain with from 5 to 15 carbon atoms;
at a level such that the composition has: a cloud point below - 100 °C, preferably in the range of from -110 °C to -175 °C; a vapor pressure, at +175 °C, below 1300 kPa and a viscosity, measured at the cloud point temperature +10 °C, below 400 cP.

2. The heat transfer fluid in accordance with Claim 1 wherein the alkyl moiety in the cycloalkane-alkyl or -polyalkyl component is selected from methyl, ethyl and propyl and mixtures thereof.

3. The heat transfer fluid in accordance with Claim 1 wherein the aliphatic hydrocarbon contains from 5 to 1.0 carbon atoms.

4. The composition in accordance with claim 1 wherein the viscosity is below 300 cP.

5. The composition in accordance with Claim 1 wherein the vapor pressure, at +175 °C, is below 827 kPa.

6. The heat transfer fluid in accordance with Claim 1 wherein the cycloalkane-alkyl component is represented by: cyclohexane-methyl, -dimethyl, -ethylmethyl, -trimethyl, -ethyl and -propyl; cyclopentane-methyl, -dimethyl, -ethylmethyl, -trimethyl, -ethyl and -propyl; cycloheptane-methyl, -dimethyl, -ethylmethyl, -trimethyl, -ethyl and -propyl; and cyclooctane-methyl, -dimethyl, -ethylmethyl, -trimethyl, -ethyl and -propyl.

7. The heat transfer fluid in accordance with Claim 1 wherein the aliphatic alkane is represented by: pentane-2,2,4-trimethyl; pentane-2,3,4-trimethyl; pentane-2-methyl, pentane-3-methyl; hexane-2-methyl; hexane-3-methyl; n-hexane; hexane-2,2-dimethyl; hexane-3,3-dimethyl; n-heptane; heptane-4-methyl; n-octane; and octane-2-methyl.

8. The heat transfer fluid in accordance with Claim 1(a) wherein the ponderal ratio of the structural non-identical cycloalkane components is in the range of from 95 : 5 to 5 : 95.

9. The heat transfer fluid in accordance with Claim 8 wherein the cycloalkane components are represented by combinations of:
ethylcyclopentane/ethylcyclohexane;
ethylcyclopentane/n-propylcyclohexane;
methylcyclohexane/ethylcyclohexane;
methylcyclohexane/n-propylcyclohexane;
ethylcyclohexane/n-propylcyclohexane; and
methylcyclohexane/ethylcyclopentane.

10. The heat transfer fluid in accordance with Claim 1(c) wherein the ponderal ratio of the cycloalkane component to the aliphatic hydrocarbon is in the range of from 97 : 3 to 10 : 90.

11. The heat transfer fluid in accordance with Claim 8 wherein the ponderal ratio of the cycloalkane components is in the range of from 75 : 25 to 25 : 75.

12. The heat transfer fluid in accordance with Claim 10 wherein the ponderal ratio of the cycloalkane component to the aliphatic hydrocarbon is in the range of from 80 : 20 to 25 : 75.

13. The heat transfer fluid in accordance with Claim 12 wherein the ponderal ratio of the cycloalkane component to the aliphatic hydrocarbon is in the range of from 70 : 30 to 35 : 65.

14. The heat transfer fluid in accordance with Claim 1 (c) wherein the weight ratio of the aliphatic hydrocarbon to the cycloalkane component is in the range of from 90 : 10 to 60 : 40, whereby the aliphatic hydrocarbon is selected from 2-methylpentane, 3-methylpentane, 2,2,4-trimethylpentane and n-hexane and the cycloalkane component is selected from ethylcyclohexane and methyl-cyclohexane.
